Europäisches Patentamt

European Patent Office

Office européen des brevets

(11) Veröffentlichungsnummer: **0 230 259 B1**

(19)

(12)

# EUROPÄISCHE PATENTSCHRIFT

(45) Veröffentlichungstag der Patentschrift: **22.04.92**

(21) Anmeldenummer: **87100391.9**

(22) Anmeldetag: **14.01.87**

(51) Int. Cl.⁵: **G11B 23/023**, G11B 33/04

㉞ Behälter von Ouaderform für Gegenstände.

(30) Priorität: **18.01.86 DE 8601147 U**

(43) Veröffentlichungstag der Anmeldung:
**29.07.87 Patentblatt 87/31**

(45) Bekanntmachung des Hinweises auf die
Patenterteilung:
**22.04.92 Patentblatt 92/17**

(84) Benannte Vertragsstaaten:
**DE FR GB NL**

(56) Entgegenhaltungen:
**DE-U- 8 510 858**
**DE-U- 8 531 274**
**DE-U- 8 601 147**
**US-A- 4 378 066**
**US-A- 4 540 090**

(73) Patentinhaber: **BASF Aktiengesellschaft**
**Carl-Bosch-Strasse 38**
**W-6700 Ludwigshafen(DE)**

(72) Erfinder: **Schneider, Alfred**
**10, Rue du Marechal Lyantey**
**F-67800 Hoehnheim(FR)**
Erfinder: **Eberhard, Joachim**
**Freiherr von Grechtlerstrasse 37**
**W-7634 Kippenheim(DE)**

EP 0 230 259 B1

## Beschreibung

Die Erfindung betrifft einen Behälter von Quaderform für Gegenstände, insbesondere Aufzeichnungsträger, mit einem Bodenteil, der eine Rückwand, eine Bodenwand und Seitenwände aufweist, und mit einem Deckelteil, der aus zumindest einer Deckelwand und daran vorgesehenen, sich wenigstens teilweise über die Seitenlänge der Deckelwand erstreckenden Deckelseitenwandteilen besteht, wobei zwischen Deckel- und Bodenteil-Seitenwänden wenigstens eine geringe Vorspannung besteht und Gelenkeinrichtungen und Rasteinrichtungen an den Seitenwänden vorgesehen sind und wobei jede Gelenkeinrichtung als ein zenraler Gelenkzapfen und eine entsprechende Bohrung und dazu jeweils konzentrisch ein zumindest teilkreisförmiger Vorsprung und eine entsprechende Vertiefung ausgebildet ist.

Mit der DE-B-23 66 195 ist ein Behälter für Tonbandkassetten bekannt, bei dem der Deckelteil mit einer Aufnahmetasche für die Kassette und der Bodenteil mit einem Ausschnitt entsprechend der Vorderseite der Tasche ausgebildet sind, um in Schließlage ein geschlossenes, kastenförmiges Gehäuse zu bilden. Deckel- und Bodenteile sind über primitive Zapfen-Loch--Gelenke verbunden und Vorsprünge am Deckelteil begrenzen das Aufschwenken des Deckels bei ca. 180°. Der praktische Behälter ist aufgrund der Flexibilität der freien Seitenwände des Bodenteils und der Dimensionierung der Vorsprünge nur sehr eingeschränkt schwenkbegrenzt, da ein Überwinden der Vorsprünge ohne weiteres und auch unabsichtlich möglich ist, so daß ein Herausfallen der Kassette nicht wirksam verhinderbar ist.

Mit dem DE-U-78 34 754 ist ein Schwenkbehälter für mindestens zwei Aufzeichnungsträger, einen kastenförmigen in einem Kartenfach am Deckel und einen kassettenförmigen, in einer separaten Wanne am Boden des Behälters bekannt. Die Verbindung von Bodenwanne und Deckel besteht darin aus Scharnierwangen mit Vertiefungen, am Deckel vorgesehen, in die Achsstümpfe an den Außenseiten der Wannenseitenteile eingreifen. Eine Begrenzung des Öffnungswinkels tritt durch Anstoßen der rückwärtigen Oberkante des Deckels an der Vorderkante des Bodens bei ca. 130° ein.

Mit der DE-A-31 29 559 ist ein Kassettenbehälter mit Zapfen-Bohrungs-Gelenken und kreisringförmigen Vorsprüngen, die sich nicht überlappen und die zusammen einen Bogen unter 360° ergeben, bekannt. Die Enden der Ringsektoren stoßen nach vorgegebenem Schwenkweg aneinander und verursachen eine Schwenkbegrenzung z.B. bei einem 90° Öffnungswinkel des Behälters.

Mit dem DE-U-85 10 858 ist eine der vorhegehenden sehr ähnliche Gelenk- und Schwenkbegrenzungsvorrichtung mit zwei schrägflächigen Kreisringstufen bekannt geworden.

Die bekannte Gelenk- und Rastvorrichtung ist als Gelenk- und Rasteinrichtung ausgeführt, womit sich nicht mehr als zwei Raststellungen realisieren lassen.

Außerdem ist die Herstellung von geradestehenden Zapfen aufgrund der einseitigen Materialanhäufung, in deren Richtung die Zapfen durch das Schrumpfen des Kunststoffmaterials beim Erkalten nach der Spritzgußherstellung gezogen werden, nachteilig. Weiterhin sind die Zapfen wegen der halbkreisförmigen Nut leicht abbrechbar. Diese Gefahr besteht vor oder nach dem Zusammenbau des Behälters.

Es ist Aufgabe der vorliegenden Erfindung, für einen Behälter der eingangs definierten Art eine verbesserte kombinierte Gelenk- und Rasteinrichtung bereitzustellen, mit der sich eine, zwei und mehr als zwei Raststellungen realisieren lassen.

Die Aufgabe wird erfindungsgemäß mit den Merkmalen des Anspruchs 1 gelöst. Damit wird überraschend durch eine sehr vorteilhafte Weiterbildung bekannter Gelenkeinrichtungen eine zuverlässig wirkende und einfach herzustellende Gelenk- und Rasteinrichtung realisierbar.

Besondere Vorteile der erfindungsgemäßen Ausführung der Gelenk- und Rasteinrichtung liegen in der form- und anordnungsmäßigen, in Draufsicht im wesentlichen vollkreisförmigen, Anpassung von Vorsprung und Vertiefung, durch die eine zusätzliche Stabilität im Gelenk- und Rasteinrichtugnsbereich erhalten wird. Durch vorteilhafte räumliche Kombinationen des Gelenkzapfens innerhalb der Vertiefung oder Einbezug in den Vorsprung udn der Bohrung innerhalb des Vorsprungs oder der Vertiefung ergibt sich eine erhöhte Bruchsicherheit besonders beim Gebrauch des Behälters.

Für einen Behälter, bei dem die Bodenwand einen Ausschnitt aufweist, der auf zwei Seiten durch Bodenteil-Seitenwände begrenzt ist und der Deckelteil eine daran vorgesehene, in die Ausschnittskontur passende Tasche mit Taschen-Seitenwänden aufweist, wird die Erfindung anwendbar, wenn Gelenkeinrichtungen und Rasteinrichtungen zwischen den Bodenteil-Seitenwänden und den Taschenseitenwänden vorgesehen sind.

In zweckmäßiger Ausführung ist der Zapfen innerhalb der Vertiefung und die Bohrung im Vorsprung ausgebildet Umgekehrt kann auch der Zapfen am Vorsprung und die Bohrung in der Vertiefung angeordnet sein.

Es kann der zumindest eine Radialsteg am Vorsprung und die entsprechende Radialnut innerhalb der Vertiefung ausgebildet sein.

In weiterer Ausgestaltung sind der Steg und die entsprechende Nut an den Seitenwänden von prismatischer Form und weisen insbesondere einen trapezförmigen Querschnitt auf, wodurch sich eine besonders einfache Herstellung ergibt.

Praktisch ist es günstig, wenn der Vorsprung kegelstumpfförmig ausgebildet ist, und die Mantelfläche des Kegelstumpfes einen Winkel von etwa 30 - 60°, insbesondere 45°, mit der Seitenwandfläche bildet.

In weiterer Ausbildung können zwei Stege am Vorsprung und entsprechende Nuten im Bereich der Vertiefungen vorgesehen sein, um zwei Rast- und Begrenzungsstellungen des Deckels zu bilden.

In weiterer Ausbildung kann der Winkel zwischen den zwei Stegen bzw. Nuten etwa 110° - 130° betragen, wodurch sich zwei entsprechende Rastpositionen für den Deckel ergeben.

In weiterer vorteilhafter Ausführung kann der Steg halbzylinderförmig und die Nut halb-hohlzylinderisch ausgebildet sein.

Einzelheiten der Erfindung gehen aus den im folgenden beschriebenen und in der Zeichnung dargestellten Ausführungsbeispielen hervor.

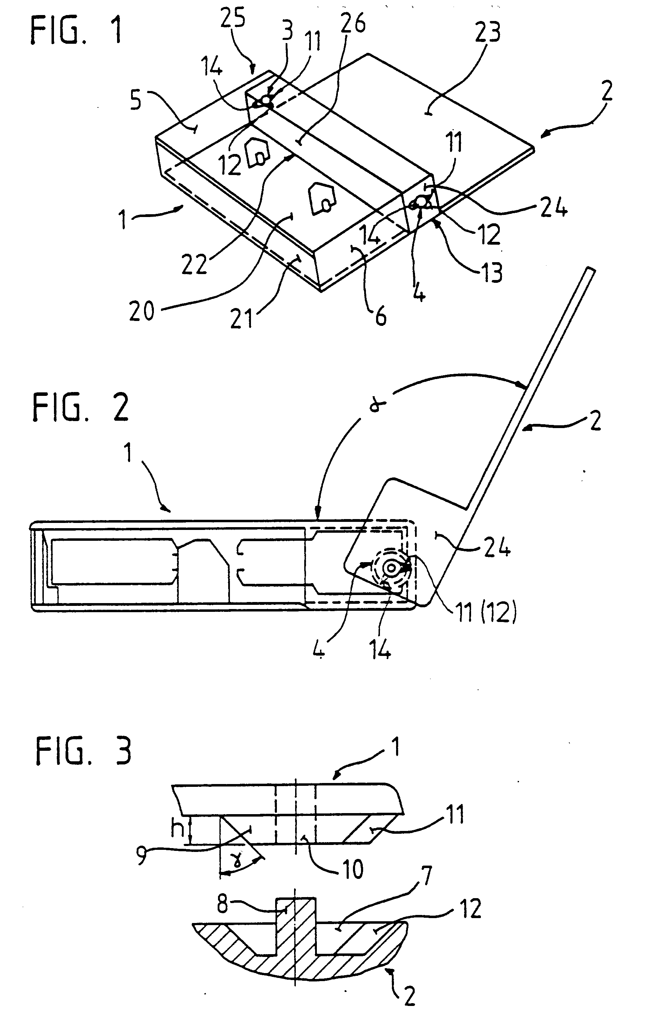

In der Zeichnung zeigen in
Fig. 1
einen zweiteiligen Kassettenbehälter mit Gelenk- und Rasteinrichtungen nach der Erfindung,
Fig. 2
den Kassettenbehälter aus Figur 1 in Offenstellung
Fig. 3 u. 4a bis 4c
Einzelheiten der Gelenk- und Rasteinrichtungen gemäß Figur 1 und 2,
Fig. 5a - c
eine Variante einer Gelenk- und Rasteinrichtung. richtung,

Der Behälter in Figur 1 besteht aus einem Bodenteil mit Bodenwand 20, Rückwand 21, Seitenwänden 5 und 6 sowie einem Deckelteil 2 mit Deckelwand 23 und einer Tasche 13, die die Taschenseitenwände 24 und 25 und eine Taschenvorderwand 26 aufweist. Die Gelenkeinrichtungen sind mit 3 bzw. 4 bezeichnet und an den Innenseiten der freien Enden der Seitenwände 5 und 6 des Bodenteils 1 und an den Taschenseitenwänden 24 und 25 des Deckelteils 2 vorgesehen. An den Bodenteilseitenwänden 5 und 6 sind vorzugsweise kegelstumpfförmige Vorsprünge 9 vorgesehen und an den äußeren Taschenseitenwänden 24 und 25 befinden sich entsprechend ausgebildete Vertiefungen 7. In der Mitte der Vertiefung 7 befindet sich ein Zylinderzapfen 8, dem eine entsprechende zentrale Bohrung 10 im Vorsprung 9 entspricht. Die Höhe h (Fig. 3) des Vorsprungs 9 ist so gewählt, daß der Abstand zwischen den Stirnseiten der zwei gegenüberliegenden Vorsprünge 9 kleiner ist als zwischen den Böden der Vertiefungen 7, so daß zwischen den Teilen 1 und 2 eine zumindest geringe Vorspannkraft dieselben zusammenhält. Der Winkel $\gamma$ (Fig. 3) beträgt 30-60°, vorzugsweise 45° Beim Zusammenbau beider Teile 1 und 2 kommt der Zapfen 8 in die Bohrung 10 in Eingriff und Boden- und Deckelteile sind in der Lage zueinander ausgerichtet. Der Vorsprung 9 ist zusätzlich mit einem nasenartigen Steg 11 ausgebildet, der am Umfang des Vorsprungs 9 beginnt und sich im wesentlichen radial nach außen erstreckt. Am Umfang der Vertiefung 7 ist mindestens eine Rastnut 12, die in der Form dem Radialsteg 11 im wesentlichen entspricht, vorgesehen, so daß sich durch diese Rasteinrichtung mindestens eine Raststellung für den Deckelteil 2 gegenüber dem Bodenteil 1 ergibt.

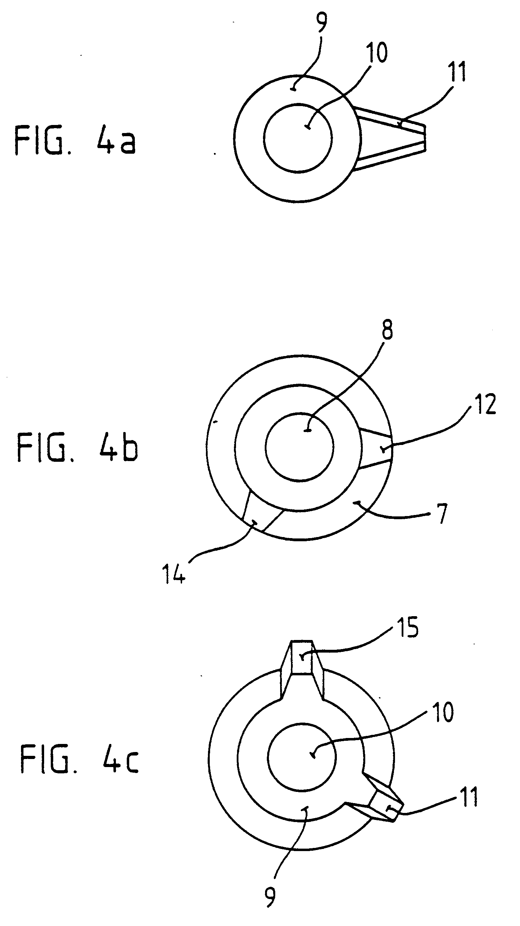

In Figuren 1 und 2 sind Ausführungen der Erfindung dargestellt. In Figur 1 ist der Steg 11 mit keiner von zwei Rastnuten 12 im Eingriff. In Figur 2 ist der Steg 11 in einer Rastnut 12 befindlich, wobei Steg 11 und Rastnut 12 so zueinander angeordnet sind, daß sich eine Arretierung des Deckelteils 2 bei etwa $\alpha$ = 120°-Offenstellung ergibt. In Figuren 1 und 2 ist jeweils noch eine Rastnut 14 für eine Verrastung in Schließstellung vorgesehen, die in Drehrichtung des Deckelteils 2 gesehen um etwa 180° (Fig. 1) oder etwa 120° (Fig. 2) zur jeweilig dargestellten Deckelteillage entfernt liegt. Für mehr als zwei Rastpositionen sind einfach entsprechend weitere Rastnuten an der Vertiefung 7 am Deckelteil 2 vorsehbar. Wenn gemäß Figur 4c noch ein zweiter Steg 15 am Vorsprung 9 des Bodenteils 1 vorgesehen ist, der im Winkel gegenüber dem Steg 11 angeordnet ist, lassen sich sowohl doppelte Arretierungspositionen als auch entsprechend mehr Raststellungen realisieren.

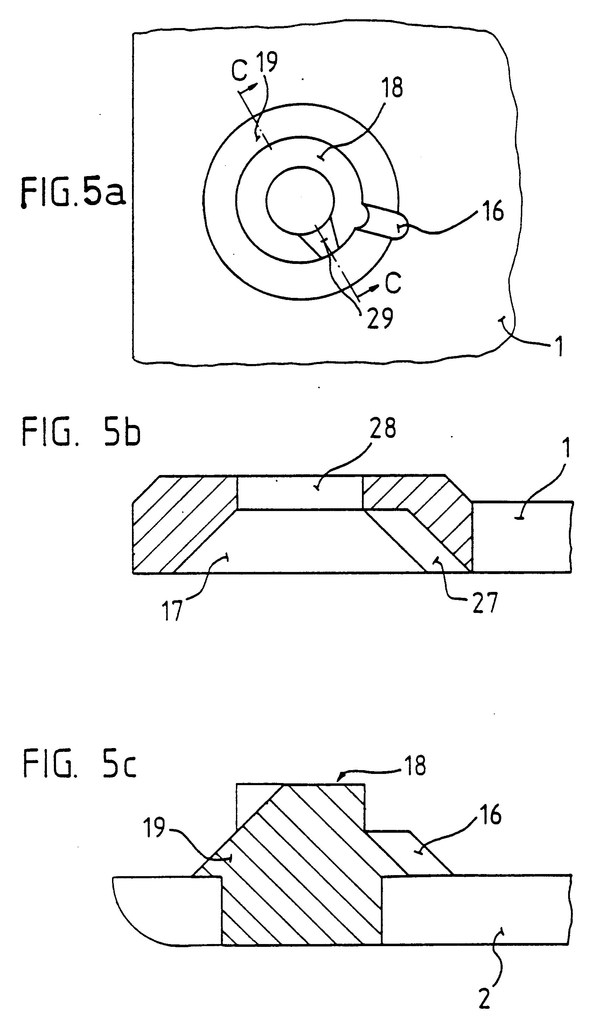

In Figur 5 ist eine Variante der Erfindung gezeigt, wobei ein Zapfen 18 am Vorsprung 19 des Deckelteils 1 vorgesehen ist und eine entsprechende Vertiefung 17, hier am Bodenteil 2, angebracht ist. Zapfen 18 ist mit einer Abflachung 29 versehen, die zur Montageerleichterung und/oder zur Erzeugung einer vergrößerten Vorspannung dient. Dem Zapfen 18 ist eine Bohrung 28 zugeordnet. Der Steg 16 ist als Halbzylinder (Fig. 5a) ausgebildet und die Nut 27 ist entsprechend als halbhohlzylindrische Rinne ausgebildet. Figur 5c ist ein Schnitt durch den Deckelteil 1 gemäß Schnittlinie c-c' in Figur 5a

Selbstverständlich kann Steg 16 auch wie Steg 11 prismatisch, insbesondere im Querschnitt trapezförmig, ausgeführt sein. Ebenso sind auch für den Vorsprung 9, 19 und die Vertiefung 7, 17 andere in Draufsicht kreisförmige Körper- bzw. Muldenformen denkbar wie etwa eine Kugelkalotte, Parabol- oder Hyperbolformen usw.. Es ist durch jede dieser Raumformen sichergestellt, daß eine störungsfreie Montage der Boden- und Deckelteile 1 bzw. 2 und eine zweckentsprechende Funktionsweise der Gelenkeinrichtungen 3 und 4 und Rasteinrichtungen erreicht wird. Es ist unerheblich, an welchem Teil, Boden- oder Deckelteil, welcher Teil der Gelenk- und Rasteinrichtungen vorgesehen wird, wenn sie nur wie oben beschrieben erfindungsgemäß zusammenwirken.

Die beschriebenen Gelenk- und Rasteinrichtungen sind in der Anwendung nicht auf Behälter beschränkt. Eine Verwendung ist durchaus auch bei Kassetten mit beweglich angelenkten Frontklappen usw. denkbar.

**Patentansprüche**

1. Behälter von Quaderform für Gegenstände, insbesondere Aufzeichnungsträger, mit einem Bodenteil, der eine Rückwand, eine Bodenwand und Seitenwände aufweist, und mit einem Deckelteil, der aus zumindest einer Deckelwand und daran vorgesehenen, sich wenigstens teilweise über die Seitenlänge der Deckelwand erstreckenden Deckelseitenwandteilen, besteht, wobei zwischen Deckel- und Bodenteil-Seitenwänden wenigstens eine geringe Vorspannung besteht und Gelenkeinrichtungen und Rasteinrichtungen an den Seitenwänden vorgesehen sind und wobei jede Gelenkeinrichtung als ein zentraler Gelenkzapfen (8, 18) und eine entsprechende Bohrung (10 bzw. 28) und dazu jeweils konzentrisch ein zumindest teilkreisförmiger Vorsprung (9, 19) und eine entsprechende Vertiefung (7 bzw. 17) ausgebildet ist,
dadurch gekennzeichnet, daß der Vorsprung (9, 19) und die Vertiefung (7 bzw. 17) im wesentlichen vollkreisförmig ausgebildet sind und daß die Rasteinrichtung aus zumindest einem zum Gelenkzapfen (8, 18) und zur Bohrung (10, 28) im wesentlichen radialen Steg (11, 15, 16) und einer dazu passenden Nut (12, 14, 27) besteht.

2. Behälter nach Anspruch 1, wobei die Bodenwand (20) einen Ausschnitt (22) aufweist, der auf zwei Seiten durch Bodenteil-Seitenwände (5, 6) begrenzt ist und der Deckelteil (2) eine daran vorgesehene, in die Ausschnittskontur passende Tasche (13) mit Taschen-Seitenwänden (24, 25) aufweist, dadurch gekennzeichnet, daß die Gelenkeinrichtungen und Rasteinrichtungen zwischen den Bodenteil-Seitenwänden (5 bzw. 6) und den Taschen-Seitenwänden (24, 25) vorgesehen sind.

3. Behälter nach Anspruch 1 oder 2, dadurch gekennzeichnet, daß der Zapfen (8) innerhalb der Vertiefung (7) und die Bohrung (10) im Vorsprung (9) ausgebildet ist.

4. Behälter nach Anspruch 1 oder 2, dadurch gekennzeichnet, daß der Zapfen (18) am Vorsprung (19) und die Bohrung (28) in der Vertiefung (17) angeordnet ist.

5. Behälter nach Anspruch 1 oder 2, dadurch gekennzeichnet, daß der zumindest eine Radialsteg (11, 15, 16) am Vorsprung (9, 19) und die passende Radialnut (12, 14, 27) innerhalb der Vertiefung (7, 17) ausgebildet ist.

6. Behälter nach Anspruch 1 oder 2, dadurch gekennzeichnet, daß der Steg (11, 15, 16) und die entsprechende Nut (12, 14, 27) an den Seitenwänden (5, 24 und 6, 25) von prismatischer Form sind und insbesondere einen trapezförmigen Querschnitt aufweisen.

7. Behälter nach Anspruch 1 oder 2, dadurch gekennzeichnet, daß der Vorsprung (9,19) kegelstumpfförmig ausgebildet ist und die Mantelfläche des Kegelstumpfes einen Winkel (γ) von etwa 30 - 60°, insbesondere 45° mit der Seitenwandfläche (5 bzw. 6) bildet.

8. Behälter nach Anspruch 1 bis 6, dadurch gekennzeichnet, daß zwei Stege (11, 15) am Vorsprung (9) und entsprechende Nuten (12, 14) im Bereich der Vertiefung (7) vorgesehen sind.

9. Behälter nach Anspruch 8, dadurch gekennzeichnet, daß der Winkel zwischen den zwei Stegen (11 und 15) bzw. Nuten (12 und 14) etwa 110° - 130° beträgt.

10. Behälter nach Anspruch 1 und einem oder mehreren der Ansprüche 2 bis 9, dadurch gekennzeichnet, daß der Steg (16) halbzylinderförmig ist und die Nut (27) halb-hohlzylindrisch ausgebildet ist.

**Claims**

1. A cuboid container for articles, particularly recording media, having a base part which possesses a rear wall, a base wall and side walls, and a lid part which consists of one or more lid walls provided with lid side wall parts which extend over some or all of the length of the sides of the lid wall, at least a slight pre-stress existing between the side walls of the lid part and of the base part, and hinging devices and engagement devices being provided on the side walls and each hinging device being designed as a central hinge pin (8, 18) and a corresponding hole (10 or 28) and, in each case concentrically thereto, one or more partially circular projections (9, 19) and a corresponding recess (7 or 17), wherein the projection (9, 19) and the recess (7 or 17) are designed so as to be substantially completely circular and wherein the engagement device comprises one or more webs (11, 15, 16) which are substantially radial to the hinge pin (8, 18) and to the hole (10, 28) and a groove (12, 14, 27) which fits the said webs.

2. A container as claimed in claim 1, the base wall (20) having a cut-out (22) which is limited on two sides by base part side walls (5, 6) and the lid part (2) being provided with a pocket (13) which fits into the outline of the cut-out and has pocket side walls (24, 25), wherein the hinging devices and engagement devices are provided between the base part side walls (5 or 6) and the pocket side walls (24, 25).

3. A container as claimed in claim 1 or 2, wherein the pin (8) is formed inside the recess (7) and the hole (10) in the projection (9).

4. A container as claimed in claim 1 or 2, wherein the pin (18) is arranged on the projection (19) and the hole (28) in the recess (17).

5. A container as claimed in claim 1 or 2, wherein the one or more radial webs (11, 15, 16) are formed on the projection (9, 19) and the matching radial groove (12, 14, 27) inside the recess (7, 17).

6. A container as claimed in claim 1 or 2, wherein the web (11, 15, 16) and the corresponding groove (12, 14, 27) on the side walls (5, 24 and 6, 25) are of prismatic shape and especially have a trapezoidal cross-section.

7. A container as claimed in claim 1 or 2, wherein the projection (9, 19) is of frustoconical design and the generated surface of the truncated cone forms an angle (γ) of about 30 - 60°, especially 45°, with the surface (5 or 6) of the side wall.

8. A container as claimed in any of claims 1 to 6, wherein two webs (11, 15) are provided on the projection (9) and corresponding grooves (12, 14) in the region of the recess (7).

9. A container as claimed in claim 8, wherein the angle between the two webs (11 and 15) and grooves (12 and 14) is about 110° - 130°.

10. A container as claimed in claim 1 and one or more of claims 2 to 9, wherein the web (16) is of semi-cylindrical shape and the groove (27) is designed as a hollow semi-cylinder.

**Revendications**

1. Récipient parallèlépipédique pour objets, en particulier pour supports d'enregistrement, comportant une partie fond qui présente une paroi arrière, une paroi de fond et des parois latérales et une partie couvercle qui est constituée d'au moins une paroi de couvercle et des parties de parois latérales de couvercle prévues sur elle et s'étendant au moins en partie sur la longueur de ses côtés, au moins une faible précontrainte existant entre les parois latérales de la partie couvercle et de la partie fond au moins une faible précontrainte et des dispositifs d'articulation et des dispositifs d'encliquetage étant prévus sur ces parois latérales, et chaque dispositif d'articulation étant constitué d'un tourillon d'articulation central (8,18) et d'un trou correspondant (10, 28) et, respectivement concentriques avec ceux-ci, d'une saillie au moins en arc de cercle (9,19) et d'un creux correspondant (7,17), caractérisé par le fait que la saillie (9,19) et le creux (7,17) forment sensiblement un cercle complet et que le dispositif d'encliquetage est constitué d'au moins une nervure (11,15,16) dans l'ensemble radiale par rapport au tourillon d'articulation (8,18) et au trou (10,28) et d'une rainure (12,14,27) ajustée à celle-ci.

2. Récipient selon la revendication 1, sur lequel la paroi de fond (20) présente une échancrure (22) qui est limitée sur deux côtés par les parois latérales (5,6) de la partie fond et la partie couvercle (2) présente une poche (13) prévue sur elle, s'ajustant dans le contour de l'échancrure et ayant des parois latérales (24,25), caractérisé par le fait que les dispositifs d'articulation et les dispositifs d'encliquetage sont prévus entre les parois latérales (5,6) de la partie fond et les parois latérales (24,25) de la poche.

3. Récipient selon l'une des revendications 1 et 2, caractérisé par le fait que le tourillon (8) est formé dans le creux (7) et le trou (10) ménagé dans la saillie (9).

4. Récipient selon l'une des revendications 1 et 2, caractérisé par le fait que le tourillon (18) est formé sur la saillie (19) et le trou (28) ménagé dans le creux (17).

5. Récipient selon l'une des revendications 1 et 2, caractérisé par le fait que la ou les nervures radiales (11,15,16) sont formées sur la saillie (9,19) et la rainure radiale (12,13,27) ajustée à elle(s) est formée dans le creux (7,17).

**6.** Récipient selon l'une des revendications 1 et 2, caractérisé par le fait que la nervure (11,15,16) et la rainure correspondante (12,14,27) situées sur les parois latérales (5,24 et 6,25) sont prismatiques et en particulier de section trapézoïdale.

**7.** Récipient selon l'une des revendications 1 et 2, caractérisé par le fait que la saillie (9,19) est tronconique et la surface latérale du tronc de cône fait un angle ( ) d'environ 30 à 60 degrés, en particulier de 45 degrés, avec la surface de la paroi latérale (5 ou 6).

**8.** Récipient selon les revendications 1 à 6, caractérisé par le fait que deux nervures (11,15) sont prévues sur la saillie (9) et des nervures correspondantes (12,14) prévues dans la zone du creux (7).

**9.** Récipient selon la revendication 8, caractérisé par le fait que l'angle entre les deux nervures (11 et 15) ou les rainures (12 et 14) est d'environ 110 degrés-130-degrés.

**10.** Récipient selon la revendication 1 et l'une ou plusieurs des revendications 2 à 9, caractérisé par le fait que la nervure (16) est de forme semi-cylindrique et la rainure (27) est demi-cylindrique creuse.

FIG. 1

FIG. 2

FIG. 3

FIG. 4a

FIG. 4b

FIG. 4c

FIG.5a

FIG. 5b

FIG. 5c